# EUROPÄISCHE PATENTSCHRIFT

(11) **EP 2 811 835 B1**
(45) Veröffentlichungstag und Bekanntmachung des Hinweises auf die Patenterteilung: **14.10.2020**
(21) Anmeldenummer: 13713716.2
(22) Anmeldetag: 29.01.2013
(51) Int. Cl.: A21B 3/13, A21D 8/06

(54) **VERFAHREN ZUM HERSTELLEN VON BACKWAREN**
METHOD FOR PRODUCING BAKED GOODS
PROCÉDÉ DE FABRICATION DE PRODUITS DE BOULANGERIE

(30) Priorität: 06.02.2012 AT 500242012
(43) Veröffentlichungstag der Anmeldung: 17.12.2014
(73) Patentinhaber: Hobel, Michael, 4063 Hörsching (AT); Kraihamer, Norbert, 5163 Mattsee (AT); Augendopler, Peter, 1130 Wien (AT); H.U. Privatstiftung, 1010 Wien (AT)
(72) Erfinder: HOBEL, Michael, 4063 Hörsching (AT); KRAIHAMER, Norbert, 5163 Mattsee (AT); AUGENDOPLER, Peter, 1130 Wien (AT)
(74) Vertreter: Hübscher & Partner Patentanwälte GmbH
(86) Internationale Anmeldenummer: PCT/AT2013/050026
(87) Internationale Veröffentlichungsnummer: WO 2013/116884

(56) Entgegenhaltungen:
- WO-A1-98/14063
- WO-A1-2011/035383
- US-A- 701 662
- US-A- 5 048 707

## Beschreibung

Die Erfindung bezieht sich auf ein Verfahren zum Herstellen von Backwaren in einer vorgegebenen Form, wobei ein Teigling in einem geschlossenen Formraum nach einer Gare in unmittelbarer Aufeinanderfolge unter Wärmezufuhr gebacken wird, wobei der Teigling während des Backens den Formraum unter einer Gasverdrängung vollständig ausfüllt.

Unter dem Begriff Teig werden im Folgenden Hefe- und Sauerteige verstanden, die zum Unterschied von Massen eine ausreichende Formstabilität aufweisen, bis die Teigstruktur durch die Wärmezufuhr beim Backen dauerhaft gefestigt wird. Zum Lockern der Teige und Teiglinge, also der für die Herstellung von Backwaren vorbereiteten Teigstücke, muss für eine entsprechende Gärung gesorgt werden, um ausreichend Kohlenstoffdioxid zur Porenbildung beispielsweise bei der Hefegärung durch Spaltung einfacher Zucker bzw. bei Sauerteigen durch Milchsäurebakterien und Hefen zur Verfügung stellen zu können. Backwaren aus solchen vorgeformten Teiglingen können daher erst nach einer Gare, die in einem gesonderten Gärraum durchgeführt wird, einem Backvorgang üblicherweise mit Heißluft unterworfen werden. Aufgrund des Gärvorgangs und der durch den Ofentrieb bedingten Volumszunahme kann die Gestalt der jeweiligen Backware nur grob vorgegeben werden, wobei eine feinstrukturierte Oberflächengestaltung zufolge der Vorgänge bei der Krustenbildung nicht möglich ist. Insbesondere bei der Nachbildung von bestimmten Objekten durch Backwaren spielt aber die Möglichkeit einer feinstrukturierten Oberflächengestaltung eine maßgebliche Rolle.

Zum Herstellen von Backwaren in einem vorgegebenen Formwerkzeug ist es bekannt (WO 2004/098295 A1), einzelne Teile dieser Backwaren in geschlossenen Formen zu backen und dann unter Füllung von sich zwischen den Teilen ergebenden Hohlräumen zum Fertigprodukt zusammenzusetzen. Die Teiglinge werden dabei nach einer Gare in unmittelbarer Aufeinanderfolge unter Wärmezufuhr gebacken, wobei die Teiglinge während des Backens den Formraum unter einer Gasverdrängung ausfüllen. Die Gasverdrängung erfolgt über Schlitze zwischen den Verbindungsflanschen der Formwerkezugteile, was eine feinstrukturierte Nachbildung der Oberflächengestalt der Formwände aufgrund von verbleibenden Gaspolstern ausschließt. Die Belüftung des Formraums der Formwerkzeuge kann aber auch über poröse Wände des Formwerkzeugs erfolgen. Poröse Formwerkzeuge erlauben bei einer ausreichenden Porosität der Formwände ein Entweichen des Gases über die gesamte Wandfläche, was ein sattes Anlegen des Teiglings an der Formwand ermöglicht. Trotzdem kann keine feinstrukturierte Oberflächenkruste der Backware erreicht werden, weil auch nach dem Anlegen des Teiglings an der Formwand Gas durch die Formwand austreten kann, sodass über die Formwand kein entsprechender Gegendruck aufgebaut werden kann. Insbesondere der durch die Feuchtigkeit des Teiglings während des Backens entstehende Dampf reißt die Oberflächenkruste mit der Wirkung auf, dass keine über die gesamte Oberfläche gleichmäßig feinstrukturiert ausgebildete Kruste erreicht werden kann und das Backergebnis unbefriedigend ist.

Um ein genaues Abstimmen der Teiglingmenge auf das Füllvolumen der Form zu vermeiden, wird nach der WO 2011/035383 A1 die Gare so geführt, dass der Formraum nicht nur vollständig ausgefüllt, sondern auch durch in der Form vorgesehene Belüftungsöffnungen nach außen durchtritt, um dem Bäcker anzuzeigen, dass der Formraum ausgefüllt ist und der eigentliche Backvorgang eingeleitet werden kann. Das Gas wird demnach nicht durch den Ofentrieb des Teiglings, sondern durch die Gare aus dem Formraum verdrängt, die dem eigentlichen Backvorgang und damit dem Ofentrieb vorausgeht. Damit kann beim Backvorgang keine feinstrukturiert ausgebildete Kruste sichergestellt werden, was auch nicht angestrebt wird, weil ein Speisenbehälter aus Brotteig gebacken werden soll. Weiterer Stand der Technik ist den Dokumenten WO98/14063 und US701662 zu entnehmen.

Der Erfindung liegt somit die Aufgabe zugrunde, ein Verfahren anzugeben, mit dessen Hilfe Backwaren entsprechend einer vorgegebenen Form maßhaltig mit einer feinstrukturierten Oberfläche hergestellt werden können.

Ausgehend von einem Verfahren der eingangs geschilderten Art löst die Erfindung die gestellte Aufgabe dadurch, dass sich der hinsichtlich seines Gewichts auf den Rauminhalt des Formraums abgestimmte Teigling durch den Ofentrieb unter Ausbildung einer feinstrukturierten Kruste an die den Formraum begrenzende, gasdichte Formwand anlegt, dass das Gas aus dem Formraum im Bereich von in der Formwand vorgesehenen Vertiefungen durch Entgasungsöffnungen abgeleitet wird, dass die Vertiefungen über einen Oberflächenbereich vorstehende Erhebungen der Backware bestimmen und dass das Gas durch den Ofentrieb des Teiglings in die Vertiefungen verdrängt wird.

Da zufolge dieser Maßnahmen das beim Backen aus dem Teigling austretende Gas nur im Bereich von Vertiefungen in der Formwand des Formwerkzeugs, also im Bereich von über die Oberfläche der Backware vorstehenden Erhebungen, aus dem Formwerkzeug austreten können, legt sich der Teigling durch den Ofentrieb, bei dem sich das Volumen des Teiglings aufgrund der Erwärmung des während der Gare gebildeten, in Teigporen eingeschlossenen Kohlenstoffdioxids vergrößert, nicht nur unter einer Gasverdrängung in die Vertiefungen satt an die Formwand an, sondern füllt auch die Vertiefungen vollständig aus, weil ja das in die Vertiefungen verdrängte Gas durch den Teigling vollständig aus den Vertiefungen ausgetrieben werden kann. Durch das Anlegen des Teiglings an der Wandung des Formraums wird eine der Oberflächenstruktur der Formraumwandung folgende Krustenbildung mit einer feinstrukturierten Oberfläche unterstützt, weil die gasdichte Formwand einen Gegendruck zum Kohlendioxid innerhalb des Teiglings bedingt und ein Aufreißen der Oberfläche durch austretendes Kohlendioxid verhindert, sodass nach dem Beendigen des Backvorgangs und einer Entformung eine Backware erhalten wird, die nicht nur die durch den Formraum bestimmte Gestalt eines Objekts genau wiedergibt, sondern auch eine feinstrukturierte Oberfläche mit einer gleichmäßigen feinen Oberflächenkruste aufweist.

Voraussetzung ist allerdings, dass die Gare des Teiglings in diesem Formraum durchgeführt wird und daher Handhabungen des Teiglings zwischen der Gare und dem Backvorgang entfallen. Die Gare kann dabei je nach der Teigführung unterschiedlich gestaltet werden und wird mit der Erwärmung des Formraums auf Backtemperatur beendet. Durch die Temperaturführung, den Feuchtigkeitsgehalt und die Backdauer kann in an sich bekannter Weise auf das Backergebnis Einfluss genommen werden.

Zum Herstellen von Backwaren in einer vorgegebenen Form aus entsprechenden Teiglingen kann von einer Vorrichtung mit wenigstens einem geteilten Formwerkzeug ausgegangen werden, wenn das einen geschlossenen Formraum bildende Formwerkzeug Entgasungsöffnungen im Bereich von in der Formwand vorgesehenen Vertiefungen aufweist, die über einen Oberflächenbereich vorstehende Erhebungen der Backware bestimmen. Da im Bereich von Vertiefungen in der Formwand die Gefahr besteht, dass diese Vertiefungen durch den Teigling verschlossen werden, bevor das Gas aus diesen Vertiefungen durch den Teigling verdrängt wird, sind im Bereich dieser Wandvertiefungen, insbesondere auf dem Vertiefungsgrund, die Entgasungsöffnungen vorzusehen, durch die das Gas aus dem Formraum nach außen verdrängt werden kann, damit eine satte Teiganlage auch im Bereich solcher Vertiefungen der Formwand gewährleistet wird.

Anhand der Zeichnung wird das erfindungsgemäße Verfahren näher erläutert. Es zeigen
- Fig. 1: ein Formwerkzeug zur Durchführung des erfindungsgemäßen Verfahrens in einer zum Teil aufgerissenen Seitenansicht,
- Fig. 2: den oberen Formteil des Formwerkzeugs nach der Fig. 1 in einer Ansicht auf die Innenseite,
- Fig. 3: eine Vorrichtung zum Herstellen einer Mehrzahl von Backwaren in einer vorgegebenen Form in einer vereinfachten Draufsicht in einem kleineren Maßstab,
- Fig. 4: die Vorrichtung nach der Fig. 3 in einem Schnitt nach der Linie IV-IV der Fig. 3 und
- Fig. 5: einen Schnitt nach der Linie V-V der Fig. 3.

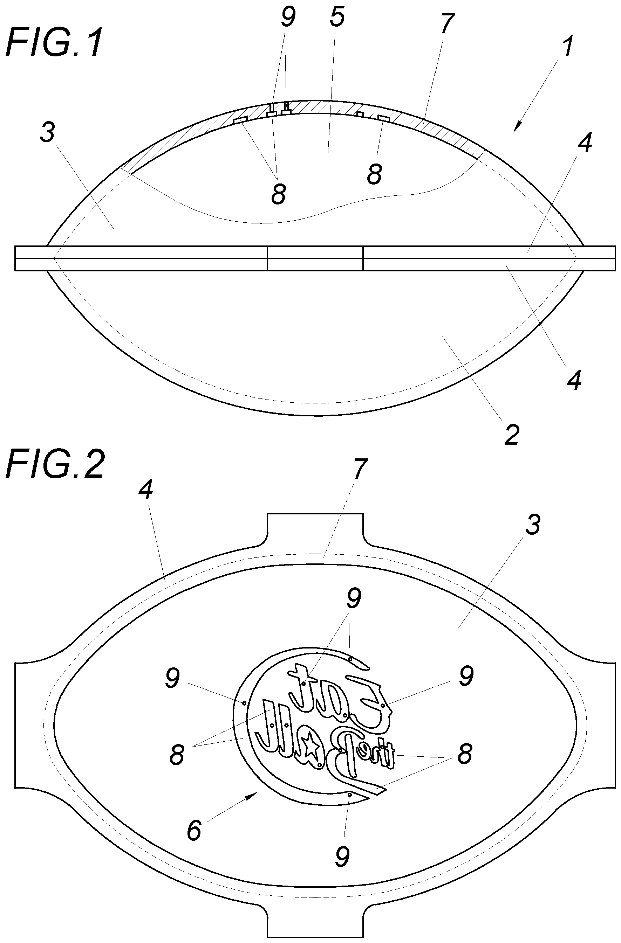

Das Formwerkzeug 1 gemäß den Fig. 1 und 2, zum Durchführen des erfindungsgemäßen Verfahrens, weist einen unteren und einen oberen Formteil 2, 3 auf, wobei diese Formteile 2, 3 je mit einem umlaufenden Randflansch 4 versehen sind, um die beiden Formteile 2, 3 miteinander zum Formwerkzeug 1 zu verbinden, das einen geschlossenen Formraum 5 bildet. Dieser Formraum 5 bestimmt eine Raumform für die herzustellende Backware. Im Fall des Ausführungsbeispieles stellt der Formraum 5 eine einem Football nachgebildete Raumform dar, die aber selbstverständlich auch anderen Objekten nachempfunden werden kann. Der durch die Backware nachgebildete Football soll gemäß dem Ausführungsbeispiel ein Logo 6 in Form einer erhabenen Oberflächenstruktur der Backware aufweisen. Demgemäß ist in der Formwand 7, vorzugsweise des oberen Formteils 3, das Logo 6 durch Vertiefungen 8 als Negativform vorgesehen. Diese Vertiefungen 8 sind mit Entgasungsöffnungen 9 versehen, wobei die einzelnen voneinander getrennten Vertiefungen 8 jeweils wenigstens eine Entgasungsöffnung 9 aufweisen.

Um eine Backware beispielsweise aus einem Hefeteig in Form eines durch das Formwerkzeug 1 vorgegebenen Footballs herzustellen, wird der vorbereitete, hinsichtlich seines Gewichts auf den Rauminhalt des Formraums 5 abgestimmte Teigling in den unteren Formteil 2 eingebracht und das Formwerkzeug 1 durch ein Aufsetzen des oberen Formteils 3 geschlossen, der mit dem Formteil 2 über die Verbindungsflanschen 4 mit einer für den Backvorgang ausreichenden Schließkraft verbunden wird. Im geschlossenen Formwerkzeug 1 wird zunächst die Gärung des Hefeteigs durchgeführt, um eine entsprechende Lockerung des Teiges sicherzustellen. Nach der Gare wird der Backvorgang eingeleitet, indem das Formwerkzeug 1 mit Hilfe von Heißluft auf Backtemperatur erwärmt wird. Die durch den Ofentrieb bedingte Volumsvergrößerung des Teiglings lässt den Teigling an der Formwand 7 des Formwerkzeugs 1 anlegen, wobei das im Formraum 5 vorhandene Gas durch die Entgasungsöffnungen 9 aus dem Formraum 5 verdrängt wird, sodass der Teigling den Formraum 5 vollständig ausfüllt. Dies ist eine wesentliche Voraussetzung dafür, dass sich die Strukturierung der Innenfläche der Formwand 7 des Formwerkzeugs 1 formtreu auf der Backware abbildet, und zwar im Bereich der Oberfläche einer feinporigen Kruste. Nach dem Backvorgang wird das Formwerkzeug 1 geöffnet und die Backware entnommen, die die Gestalt eines Footballs mit einer feinstrukturierten Oberfläche aufweist, auf der nicht nur das Logo 6 ersichtlich ist, sondern beispielsweise auch die für einen Football charakteristischen Nähte deutlich hervortreten, wenn eine entsprechende Negativform für solche Nähte in der Formwand 7 vorgesehen ist.

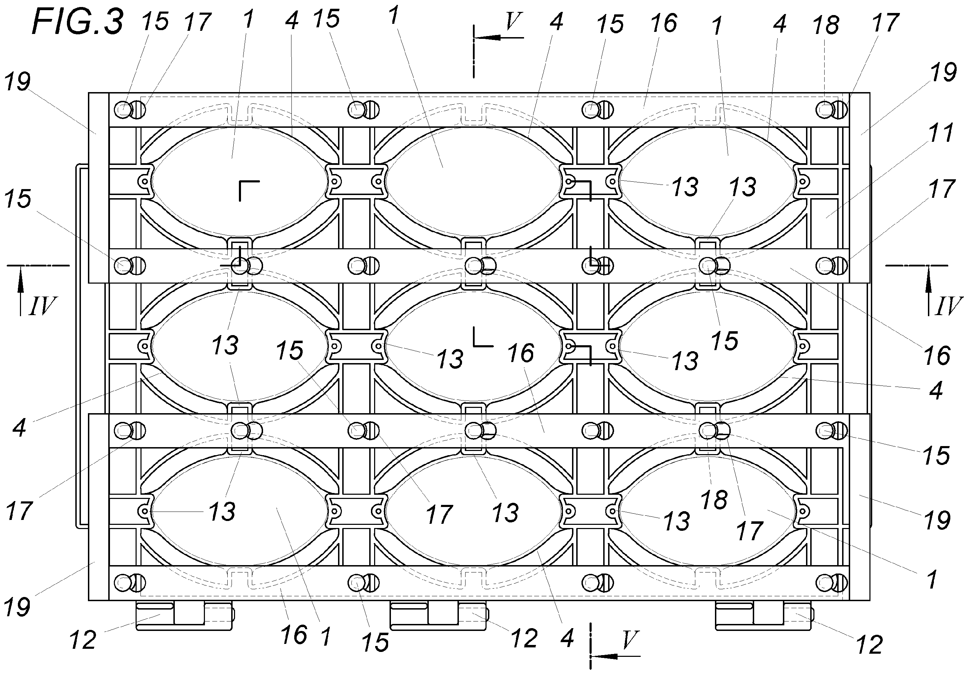

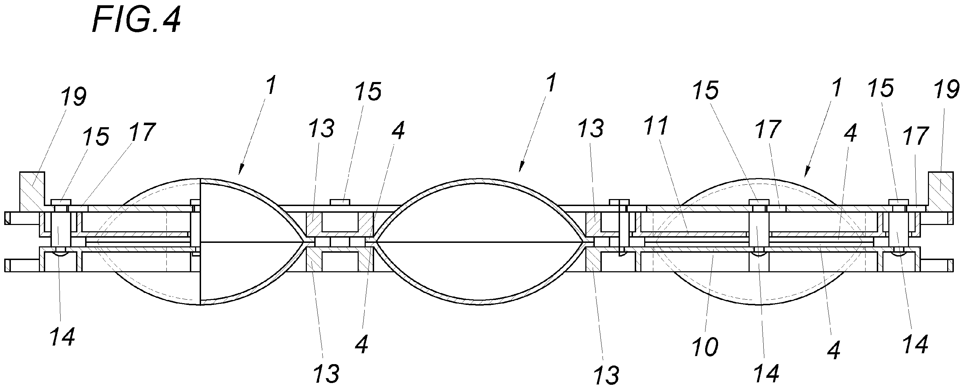

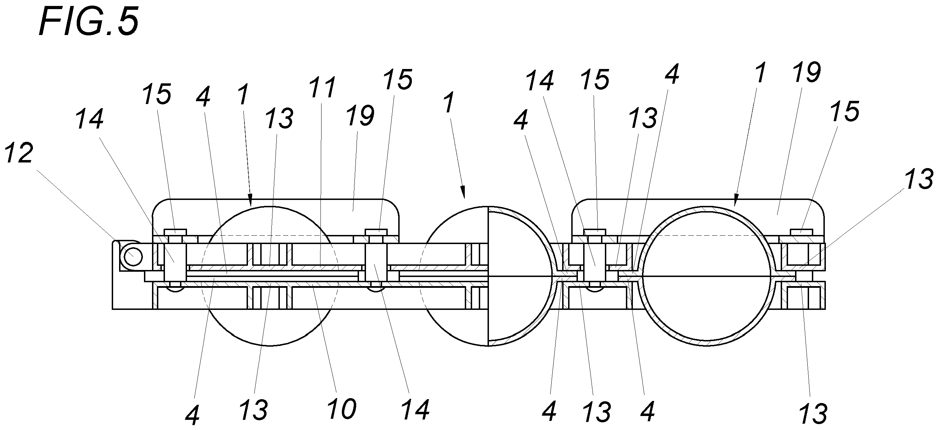

Im gewerblichen und industriellen Einsatz ist eine Mehrzahl von Formwerkzeugen 1 zur Verfügung zu stellen. Zu diesem Zweck kann gemäß den Fig. 3 bis 5 eine größere Anzahl von Formwerkzeugen 1 zwischen zwei Rahmen 10 und 11 eingespannt werden, die miteinander auf einer Seite über Scharniergelenke12 gelenkig verbunden sind. Diese Rahmen 10, 11 bilden für die Formwerkzeuge 1 reihenweise angeordnete Aufnahmen mit Druckstücken 13, zwischen denen die Verbindungsflansche 4 der Formteile 2, 3 geklemmt werden. Die Verbindungsflansche 4 können zu diesem Zweck im Bereich der Druckstücke 13 entsprechend verbreitert sein, wie dies der Fig. 2 entnommen werden kann.

Zum Verriegeln der Schließstellung der beiden Rahmen 10, 11 können an sich unterschiedliche Spannmittel eingesetzt werden. Besonders einfache Konstruktionsverhältnisse ergeben sind, wenn einer der beiden Rahmen 10, 11, vorzugsweise der untere Rahmen 10, nach oben vorstehende Verbindungsbolzen 14 aufweist, die den oberen Rahmen 11 in der Schließstellung durchsetzen und einen über den Rahmen 11 vorstehenden Kopf 15 bilden, der von einer sich am Rahmen 11 abstützenden Riegelleiste 16 hintergriffen wird. Zu diesem Zweck bilden die Riegelleisten 16 für den Kopf 15 der Verbindungsbolzen 14 eine Durchtrittsöffnung 17 mit einem anschließenden Langloch 18, sodass die Riegelleisen 16 auf die Köpfe 15 der Verbindungsbolzen aufgesetzt werden, um die Köpfe 15 der Verbindungsbolzen 14 nach einem Verschieben in Richtung der Langlöcher 18 zu hintergreifen, wenn der den Kopf 15 tragende Hals der Verbindungsbolzen 14 in das Langloch 18 eingreift.

Wie insbesondere der Fig. 3 entnommen werden kann, sind die Riegelleisten 16 zu beiden Seiten jeder Längsreihe der Aufnahmen für die Formwerkzeuge 1 angeordnet, sodass die beiden Rahmen 10, 11 beidseits jedes Formwerkzeuges 1 miteinander verriegelt werden. Um die Handhabung der Riegelleisten 16 bei der Verriegelung der beiden Rahmen 10, 11 bzw. bei deren Entriegelung zu erleichtern, können die Riegelleisten 16 paarweise über Querschenkel 19 zu rahmenartigen Betätigungseinheiten verbunden sein, sodass die beiden Rahmen 10, 11 jeweils gleichzeitig über ein Riegelleistenpaar verriegelt werden können. Es braucht wohl nicht besonders hervorgehoben zu werden, dass die Riegelleisten 16 mit entsprechenden Anlaufflächen für die Köpfe 15 der Verbindungsbolzen 14 versehen sein können, um mit der gegenseitigen Verriegelung der Rahmen 10, 11 eine entsprechende Schließkraft zur teigdichten Verbindung der Verbindungsflansche 4 der Formteile 2, 3 aufzubringen.

## Patentansprüche

1. Verfahren zum Herstellen von Backwaren in einer vorgegebenen Form, wobei ein Teigling in einem geschlossenen Formraum (5) nach einer Gare in unmittelbarer Aufeinanderfolge unter Wärmezufuhr gebacken wird, wobei der Teigling während des Backens den Formraum (5) unter einer Gasverdrängung vollständig ausfüllt, **dadurch gekennzeichnet, dass** sich der hinsichtlich seines Gewichts auf den Rauminhalt des Formraums (5) abgestimmte Teigling durch den Ofentrieb unter Ausbildung einer feinstrukturierten Kruste an die den Formraum (5) begrenzende, gasdichte Formwand (17) anlegt, dass das Gas aus dem Formraum (5) im Bereich von in der Formwand (7) vorgesehenen Vertiefungen (8) durch Entgasungsöffnungen (9) abgeleitet wird, dass die Vertiefungen (8) über einen Oberflächenbereich vorstehende Erhebungen der Backware bestimmen und dass das Gas durch den Ofentrieb des Teiglings in die Vertiefungen (8) verdrängt wird.

## Claims

1. Method for producing baked goods in a predefined shape, wherein a piece of dough is baked in a closed mould cavity (5) after proving in direct succession with heat supply, wherein, during the baking, the piece of dough completely fills the mould cavity (5) with a displacement of gas, **characterised in that** the piece of dough which is adapted in terms of its weight to the capacity of the mould cavity (5) is applied by reason of the oven rising with the formation of a finely structured crust to the gas-tight mould wall (17) which delimits the mould cavity (5), the gas is discharged from the mould cavity (5) in the region of depressions (8), which are provided in the mould wall (7), through degassing openings (9), the depressions (8) determine protrusions of the baked good projecting beyond a surface region and the gas is displaced into the depressions (8) by reason of the oven rising of the piece of dough.

## Revendications

1. Procédé de fabrication de produits de boulangerie dans une forme prédéfinie, selon lequel un pâton est cuit dans un espace de moulage (5) clos immédiatement après une fermentation par apport de température, et selon lequel le pâton remplit complètement l'espace de moulage (5) pendant la cuisson en refoulant du gaz, **caractérisé en ce que** le pâton dont le poids est adapté au volume de l'espace de moulage (5) gonfle en formant une croûte à structure fine au niveau de la paroi de moulage étanche aux gaz (17) délimitant l'espace de moulage (5), que le gaz provenant de l'espace de moulage (5) est évacué dans la zone de cavités (8) prévues dans la paroi de moulage (7) par des ouvertures de dégazage (9), que les cavités (8) déterminent des renflements du produit de boulangerie sur une zone de surface et que le gaz est refoulé dans les cavités (8) par le gonflement du pâton.
